# EUROPÄISCHE PATENTSCHRIFT

(11) **EP 0 531 725 B1**
(45) Veröffentlichungstag und Bekanntmachung des Hinweises auf die Patenterteilung: **15.04.1998**
(21) Anmeldenummer: 92113625.5
(22) Anmeldetag: 10.08.1992
(51) Int. Cl.: H04H 1/00, H04B 7/08

(54) **UKW-Empfänger mit mehreren Antennen**
Multiantenne VHF receiver
Récepteur à onde ultracourtes à plusieurs antennes

(30) Priorität: 07.09.1991 DE 4129830
(43) Veröffentlichungstag der Anmeldung: 17.03.1993
(73) Patentinhaber: Blaupunkt-Werke GmbH, 31132 Hildesheim (DE)
(72) Erfinder: Wiedemann, Kurt, W-3200 Hildesheim (DE); Brüshaber, Heiko, W-3320 Salzgitter 61 (DE)

(56) Entgegenhaltungen:
- EP-A- 0 275 527
- EP-A- 0 319 782
- EP-A- 0 333 194
- DE-A- 3 510 580
- PATENT ABSTRACTS OF JAPAN vol. 17, no. 401 (E-1404)27. Juli 1993 & JP-A-05 075 397

## Beschreibung

Die Erfindung betrifft einen UKW-Empfänger mit mehreren Antennen nach dem Oberbegriff des Anspruchs 1.

Mit einem derartigen, aus der DE-A-37 41 698 bekannten Empfänger für ein Kraftfahrzeug läßt sich ein empfangenes Programmsignal ohne ein Umschalten auf eine andere Senderfrequenz über eine relativ lange Fahrstrecke mit einer guten Qualität empfangen. Fährt man jedoch aus der Reichweite des empfangenen Senders hinaus, so wird eine Abstimmung auf eine andere Senderfrequenz mit gleichem Programmsignal erforderlich. Dabei kann es vorkommen, daß ein Sendersuchlauf mehrere Alternativfrequenzen auf ihre Empfangsqualitäten überprüfen muß. Dieses kann zu Unterbrechungen der Wiedergabe des Programmsignals führen.

Aus der DE-C-34 32 848 ist es bekannt, im Rahmen des Radio-Daten-Systems (RDS) als Inhalt des auf einen 57-kHz-Hilfsträger aufmodulierten Datensignals eine Liste alternativer Frequenzen zu übertragen. Diese Information ist insbesondere für den mobilen Empfang gedacht und sagt aus, auf welchen Frequenzen ein bestimmtes Programm von der gleichen Senderkette ausgestrahlt wird. Dadurch wird es geeignet ausgebildeten Empfängern mit Speichern ermöglicht, diese Liste abzuspeichern und so die Zeit zum Einstellen des Empfängers auf die jeweils optimale Frequenz dieser Liste zu reduzieren.

Aus der EP-A-0 333 194 ist ein RDS-Empfänger bekannt, bei dem ein erster Tuner ständig auf einen Kanal abgestimmt ist, um das Audio-Signal zu empfangen, und weiterhin ein zweiter Tuner zum Empfang von RDS-Daten und zur laufenden Bestimmung der Empfangsqualität der Alternativfrequenzen vorgesehen ist. Dadurch wird die Zeit zum Einstellen des Empfängers auf die optimale Frequenz der Liste drastisch reduziert.

Der Erfindung liegt die Aufgabe zugrunde, einen UKW-Empfänger nach dem Oberbegriff des Anspruchs 1 derart zu verbessern, daß er beim Unterschreiten einer vorgegebenen Empfangsqualität ohne Unterbrechung des empfangenen Programmsignals auf eine alternative Frequenz umschaltet.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß ohne zusätzliche Mischstufe eine zwischengespeicherte Liste der empfangswürdigen Alternativfrequenzen aktualisiert wird, wobei das empfangene Programmsignal sowohl während der Aktualisierung der Liste als auch bei einer Umschaltung auf eine der alternativen Frequenzen ohne Unterbrechung wiedergegeben wird.

Vorteilhafte Ausgestaltungen des UKW-Empfängers sind in den Unteransprüchen angegeben.

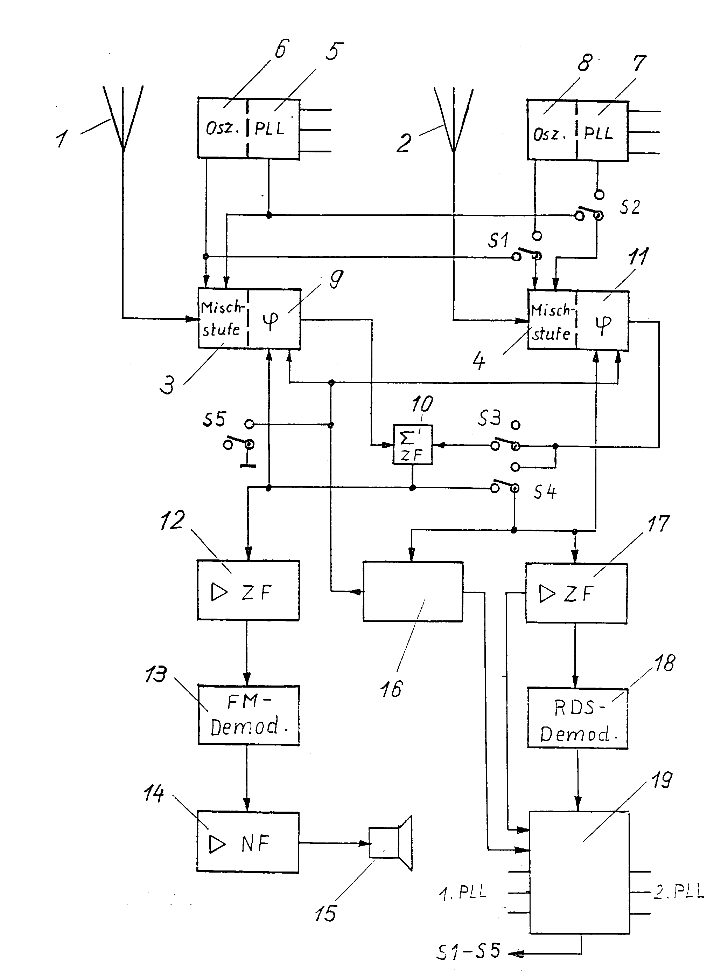

Ein Ausführungsbeispiel der Erfindung ist als stark vereinfachtes Blockschaltbild in der Zeichnung dargestellt und wird im folgenden näher beschrieben.

Bei dem mit einer ersten und mit einer zweiten Antenne 1, 2 verbundenen UKW-Empfänger sind Umschalter S1 bis S5 vorgesehen, die in der dargestellten ersten Schaltstellung den Empfänger derart schalten, daß das von jeder Antenne empfangene Signal mit einem im Empfänger erzeugten Träger gemischt wird und die somit entstandenen Mischsignale mit steuerbarer Phasenlage zu einem Summensignal addiert werden, wobei die Phasenlagen der zu addierenden Mischsignale jeweils in Abhängigkeit der Phasendifferenz zwischen dem jeweiligen Mischsignal und dem Summensignal gesteuert werden. Ein derartiger, für vier Antennen vorgesehener Empfänger, ist in der DE 37 41 698 A1 beschrieben.

Das vorliegende Ausführungsbeispiel zeigt einen für zwei Antennen ausgelegten Empfänger, bei dem die erste Antenne 1 mit einer ersten Mischstufe 3 und die zweite Antenne 2 mit einer zweiten Mischstufe 4 verbunden ist. Der ersten Mischstufe 3 ist ein mit einer ersten PLL 5 verbundener erster Oszillator 6 und der zweiten Mischstufe 4 ein mit einer zweiten PLL 7 verbundener zweiter Oszillator 8 zugeordnet. Der erste Oszillator 6 ist mit der ersten Mischstufe 3 und über den Umschalter S1 mit der zweiten Mischstufe 4 verbunden. Der die Abstimmspannung für die Vorkreisselektion liefernde Ausgang der ersten PLL 5 ist mit der ersten Mischstufe 3 und über den Umschalter S2 mit der zweiten Mischstufe 4 verbunden. Der Ausgang der ersten Mischstufe 3 ist über ein die Phasenlage des ZF-Signal steuerndes erstes Stellglied 9 mit einem Eingang einer Summierstufe 10 und der Ausgang der zweiten Mischstufe 4 über ein die Phasenlage des ZF-Signals steuerndes zweites Stellglied 11 und über den Umschalter S3 mit einem weiteren Eingang der Summierstufe 10 verbunden. Der Ausgang der Summierstufe 10 ist mit einem Steuereingang des ersten Stellgliedes 9 und mit dem Eingang eines ersten ZF-Verstärkers 12 verbunden, dem ein FM-Demodulator 13, ein NF-Verstärker 14 und mindestens ein Lautsprecher 15 nachgeschaltet sind. Der Ausgang der Summierstufe 10 ist zudem über den Umschalter S4 mit einem Steuereingang des zweiten Stellgliedes 11, dem Eingang einer Erkennungschaltung 16 für Mehrwegeempfang und dem Eingang eines zweiten ZF-Verstärkers 17 verbunden, dem ein RDS-Demodulator 18 nachgeschaltet ist. Ein Ausgang der Erkennungsschaltung 16 ist mit den zweiten Steuereingängen der Stellglieder 9, 11 verbunden. Der Ausgang des RDS-Demodulators 18 ist mit einer Steuereinrichtung 19 verbunden, welche einen Zwischenspeicher für alternative Empfangsfrequenzen, eine Auswerteschaltung zur Ermittlung der Empfangsqualität empfangener und überprüfter Sender, eine Steuerschaltung für die beiden PLL und die Umschalter S1 bis S5 aufweist. Der Steuereinrichtung 19 werden zur Ermittlung empfangswürdiger Sender von der zweiten ZF-Stufe 17 feldstärkeabhängige Signale und von der Erkennungschaltung 16 mehrwegeempfangsabhängige Signale (AM-modulationsabhängige Signale) zugeführt.

In der dargestellten ersten Schaltstellung werden die beiden Mischstufen 3, 4 mittels des ersten Oszillators 6 und der ersten PLL 5 auf dieselbe Empfangsfrequenz abgestimmt. Dabei werden die Phasenlagen der in der Summierstufe 10 zu addierenden ZF-Signale jeweils in Abhängigkeit der Phasendifferenz zwischen dem jeweiligen ZF-Signal und dem ZF-Summensignal sowie der Amplitudendemodulationsanteile derart gesteuert, daß ein qualitativ optimaler Empfang erfolgt. Während des Empfangs werden die vom Sender codiert übermittelten, im RDS-Demodulator 18 gewonnenen Daten der zum empfangenen Sender alternativen Frequenzen im Zwischenspeicher abgelegt. Zu vorgegebenen Zeitpunkten schaltet die Steuereinrichtung 19 die Umschalter S1 bis S5 kurzzeitig in ihre zweite Schaltstellung um. Während dieser kurzen Zeitspannen schaltet der Umschalter S1 die zweite Mischstufe 4 vom ersten Oszillator 6 auf den zweiten Oszillator 8, der Umschalter S2 die zweite Mischstufe 4 von der ersten PLL 5 auf die zweite PLL 7, der Umschalter S3 den weiteren Eingang der Summierstufe 10 vom Ausgang des zweiten Stellgliedes 11 ab, der Umschalter S4 die Eingänge der Erkennungsschaltung 16 und des zweiten ZF-Verstärkers 17 vom Ausgang der Summierschaltung 10 auf den Ausgang des zweiten Stellgliedes 11, und der Umschalter 5 die zweiten Steuereingänge der Stellglieder 9, 11 an Masse.

Während dieser zweiten Schaltstellung stimmt die Steuereinrichtung 19 mittels des zweiten Oszillators 8 die zweite Mischstufe 4 nacheinander auf die gespeicherten Alternativfrequenzen mit gleichem Programmsignal ab. Die dabei jeweils aus der Feldstärke und den Amplitudenmodulationsanteilen ermittelten Werte für die Empfangsqualität werden ebenfalls zwischengespeichert. Nach der Aktualisierung der Liste mit den alternativen Frequenzen schaltet der Empfänger wieder in die erste Schaltstellung zurück. Unterschreitet die Empfangsqualität des über die beiden Antennen empfangenen Senders einen vorgegebenen Pegel, so stimmt die Steuereinrichtung 19 mittels des ersten Oszillators 6 die beiden Mischenstufen 3, 4 auf die alternative Frequenz mit der zuvor als optimal ermittelten Empfangsqualität ab. Dieses Umstimmen erfolgt so schnell, daß es vom Benutzer nicht oder kaum wahrgenommen wird.

Das Aktualisieren der gespeicherten Werte der alternativen Frequenzen kann in vorgegebenen Zeitabständen und/oder beim ein- oder mehrmaligen Unterschreiten eines vorgegebenen Empfangsqualitätspegels erfolgen.

An dieser Stelle sei darauf hingewiesen, daß der beschriebene Empfänger nicht auf zwei Antennen begrenzt ist.

## Patentansprüche

1. UKW-Empfänger mit mehreren Antennen, insbesondere für ein Kraftfahrzeug, wobei in einer ersten Schaltstellung das von jeder Antenne empfangene HF-Signal in einer der jeweiligen Antenne zugeordneten Mischstufe mit einem im Empfänger erzeugten Signal eines ersten Oszillators gemischt wird und die somit entstandenen Mischsignale mit steuerbarer Phasenlage zu einem Summensignal addiert werden,
dadurch gekennzeichnet,
daß der UKW-Empfänger eine Schaltungsanordnung mit einem RDS-Demodulator (18) (Radio-Daten-System-Demodulator) aufweist, welche die alternativen Frequenzen, auf welchen dasselbe Programmsignal wie das empfangene Programmsignal empfangen werden kann, in einem Zwischenspeicher abspeichert und daß eine Steuereinrichtung (19) vorgesehen ist, welche während kurzfristiger Zeitspannen in einer zweiten Schaltstellung eine der Mischstufen (4) derart umschaltet, daß ihr ZF-Ausgangssignal einer Auswerteschaltung (16, 17, 18, 19) zugeführt und ihr Oszillatoreingang mit einem zweiten Oszillator (8) verbunden ist, der die umgeschaltete zweite Mischstufe (4) auf die alternativen Frequenzen abstimmt, um deren Empfangsqualität zu ermitteln und daß die Steuereinrichtung (19) in der ersten Schaltstellung den ersten Oszillator (6) auf den Empfang einer als empfangswürdig ermittelten alternativen Frequenz umschaltet, wenn das bisher empfangene Programmsignal einen vorgegebenen Qualitätswert unterschreitet.

2. UKW-Empfänger nach Anspruch 1,
dadurch gekennzeichnet,
daß in der zweiten Schaltstellung, während der Wiedergabe des Programmsignals, den im Zwischenspeicher abgelegten alternativen Frequenzen die ermittelten Empfangsqualitätswerte zugeordnet werden und daß der Empfänger im Anschluß daran wieder in den ersten Schaltzustand versetzt wird.

3. UKW-Empfänger nach einem der Ansprüche 1 oder 2,
dadurch gekennzeichnet,
daß das Aktualisieren der gespeicherten Werte der alternativen Frequenzen in vorgegebenen Zeitabständen und/oder beim Unterschreiten eines vorgegebenen Empfangsqualitätspegels erfolgt.

## Claims

1. VHF receiver having a plurality of antennas, in particular for a motor vehicle, in a first switch position the RF signal received by each antenna being mixed in a mixer stage (which is assigned to the respective antenna) with a signal (which is produced in the receiver) from a first oscillator, and the mixed signals produced in this way being added with a controllable phase angle to form a sum signal, characterized in that the VHF receiver has a circuit arrangement with an RDS demodulator (18) (radio data system demodulator), which stores the alternative frequencies, on which the same programme signal can be received as the received program signal, in a buffer store, and in that a control device (19) is provided which, during brief time intervals in a second switch position, switches over one of the mixer stages (4) in such a manner that its IF output signal is supplied to an evaluation circuit (16, 17, 18, 19) and its oscillator input is connected to a second oscillator (8) which matches the switched-over second mixer stage (4) to the alternative frequencies in order to determine their reception quality, and in that the control device (19), in the first switch position, switches over the first oscillator (6) to receive an alternative frequency which has been determined to be worth receiving, if the previously received program signal falls below a predetermined quality level.

2. VHF receiver according to Claim 1, characterized in that, in the second switch position and during reproduction of the program signal, the determined reception quality levels are assigned to the alternative frequencies stored in the buffer store, and in that, following this, the receiver is switched to the first switching state again.

3. VHF receiver according to one of Claims 1 or 2, characterized in that the stored values of the alternative frequencies are updated at predetermined time intervals and/or if the reception quality level falls below a predetermined reception quality level.

## Revendications

1. Récepteur FM à plusieurs antennes, notamment pour un véhicule automobile, selon lequel, dans une première position de commutation, le signal HF reçu par chaque antenne est mélangé, dans un étage mélangeur associé à chacune des antennes, avec un signal fourni par un premier oscillateur local, et le signal de mélange ainsi formé est additionné à un signal de somme avec une phase commandée,
caractérisé en ce que
• le récepteur FM comporte un circuit avec un démodulateur RDS (18) (démodulateur de système de données radio) qui peut recevoir les fréquences alternatives permettant de recevoir le même signal de programme que le signal de programme reçu, enregistré dans une mémoire intermédiaire,
• une installation de commande (19) qui, pendant des intervalles de temps de courte durée, commute l'un des étages mélangeurs (4) dans une seconde position de commutation pour que son signal de sortie de fréquence intermédiaire (FI) soit appliqué à un circuit d'exploitation (16, 17, 18, 19) et que son entrée d'oscillateur soit reliée à un second oscillateur (8) qui accorde le second étage mélangeur commuté (4), sur les fréquences alternatives, pour déterminer leur qualité de réception et,
• l'installation de commande (19), dans la première position de commutation, commute le premier oscillateur (6) sur le récepteur d'une fréquence alternative, apte à la réception, si le signal de programme reçu alors passe en dessous d'une qualité prédéterminée.

2. Récepteur FM selon la revendication 1,
caractérisé en ce que
• dans la seconde position de commutation, pendant la reproduction du signal de programme, on associe aux fréquences alternatives placées dans la mémoire intermédiaire les valeurs de qualité de réception obtenues et,
• le récepteur est alors mis de nouveau dans son premier état de commutation.

3. Récepteur FM selon l'une des revendications 1 ou 2,
caractérisé en ce que
l'actualisation des valeurs mises en mémoire des fréquences alternatives se fait à des intervalles de temps prédéterminés et/ou en cas de dépassement par en dessous d'un niveau de qualité de réception donné.
